# EUROPÄISCHE PATENTSCHRIFT

(11) **EP 0 816 059 B1**
(45) Veröffentlichungstag und Bekanntmachung des Hinweises auf die Patenterteilung: **11.08.2004**
(21) Anmeldenummer: 97106394.6
(22) Anmeldetag: 17.04.1997
(51) Int. Cl.: B32B 1/08, F16L 59/00, B29C 47/02, F16L 59/02

(54) **Rohrförmiges Dämm- und/oder Schutzmaterial, und Verfahren zur Herstellung desselben**
Tubular insulating and/or protecting material, and method for fabrication thereof
Matériau d'isolation et/ou de protection en forme de tuyau, et procédé pour la fabrication de ce matériau

(30) Priorität: 17.06.1996 DE 19624132
(43) Veröffentlichungstag der Anmeldung: 07.01.1998
(73) Patentinhaber: E. Missel GmbH & Co. KG, 70736 Fellbach/Stuttgart (DE)
(72) Erfinder:
(74) Vertreter: Finsterwald, Manfred, Dipl.-Ing., Dipl.-Wirtsch.-Ing.

(56) Entgegenhaltungen:
- EP-A- 0 106 328
- EP-A- 0 176 721
- DE-A- 3 438 448

## Beschreibung

Die Erfindung betrifft ein Verfahren zur Herstellung eines rohrförmigen Dämmmaterials zur Wärme- und/oder Schalldämmung von Installationsrohren, bei dem aus einem Schaumstoffmaterial durch Extrusion ein Hohlprofil gebildet und mit einer Folienummantelung versehen wird.

Ferner ist die Erfindung auf nach diesem Verfahren gefertigte rohrförmige Dämm- und/oder Schutzmaterialien für fluidförmige Medien führende Leitungen gerichtet.

Aus der europäischen Patentschrift 01 06 328 B2 ist ein rohrförmiges Isoliermaterial bekannt, das aus einem Verbund aus geschlossenzelligem Schaumstoff, einer Folie und einer netzartigen Schutzstruktur besteht, wobei das Rohr aus einem in Streifenform vorliegenden Schaumstoff geformt und in die auf den Schaumstoff aufkaschierte und den Schaumstoff umschließende Folie ein Fadengitter zur Erhöhung der mechanischen Festigkeit integriert ist.
Dieses rohrförmige Isoliermaterial hat sich in der Praxis sehr gut bewährt, da selbst unter härtesten Baustellenbedingungen und bei unvorsichtiger Handhabung dieses Material mechanischen Beschädigungsgefahren widersteht.

Aus der DE-A-34 38 448 ist ein Verfahren zur Herstellung von Kunststoff-Profilstäben durch Extrusion des Kunststoffes und Durchleiten des Stranges durch einen Spritzkopf bekannt, wobei ein Schaumkern aus verschäumbarem Kunststoff sowie diesen in Abstand umgebend die Haut als Außen- und/oder Innenhaut aus Kunststoff gleichzeitig extrudiert und die Stränge in den zunächst noch freien Bereich zwischen dem noch nicht vollständig aufgeschäumten Kern und der Außen- und/oder Innenhaut eingeführt werden. Auf diese Weise wird ein Kunststoff-Profilstab erhalten, bei dem die Stränge an der dem Schaumkern zugewandten Seite der Haut anliegen und in den an dieser anhaftenden Schaumkem eingebettet sind.

Aufgabe der Erfindung ist es, ein Verfahren der eingangs angegebenen Art zu schaffen, das zum einen Kostenvorteile bei der Fertigung ohne Qualitätseinbußen erbringt und zum anderen die Möglichkeit schafft, die Gebrauchseigenschaften des jeweils gefertigten Produktes den bestehenden unterschiedlichen praktischen Erfordernissen auf einfache Weise anzupassen.

Gelöst wird diese Aufgabe ausgehend von dem eingangs genannten Verfahren dadurch, dass während des Extrusionsvorgangs auf die Außenfläche des Hohlprofils unter Nutzung der noch vorhandenen Schmelzklebefähigkeit des Hohlprofils eine Vielzahl von zumindest gruppenweise etwa parallel zueinander verlaufenden, fadenförmigen Festigkeitsträgern in Form zumindest eines Gitters aus Polyäthylen, Polyester, Glasfasern oder vergleichbar reißfesten Materialien zusammen mit der Folienummantelung aufgebracht wird.

Die unmittelbare Zusammenfassung der Extrusion des Hohlprofils und der Ein- bzw. Aufbringung der zu einer Veredelung des Hohlprofils führenden Ummantelung des Hohlprofils unter Ausnutzung der aktivierten Schmelzklebekraft führt zu wesentlichen Fertigungs- und Kostenvorteilen.

Besonders vorteilhaft ist es, die Ummantelungsfolie und die Festigkeitsträger zu einem Verbund zusammenzufassen und diesen Verbund dann als Einheit auf das extrudierte Hohlprofil aufzubringen.

Eine vorteilhafte Weiterbildung der Erfindung besteht darin, dass der Verbund aus Ummantelungsfolie und netzförmigem Festigkeitsträger durch eine dünne Schaumstofflage ergänzt wird, die im Zuge der Herstellung bezüglich des extrudierten Hohlprofils als Verbindungsschicht dient.

In allen Ausführungsvarianten ist es von Vorteil, dass die einzelnen Bestandteile des zu schaffenden Produkts durch Schmelzverklebung miteinander verbunden werden können, so
daß zum einen Kosten für ein zusätzliches Klebemittel gespart werden und zum anderen eine vorteilhafte integrale Verbindung aller Bestandteile erreicht wird.

Die Erfindung umfaßt ferner ein insbesondere nach dem beschriebenen Verfahren gefertigtes rohrförmiges Dämm- und/oder Schutzmaterial, das insbesondere für fluidförmige Medien führende Leitungen bestimmt ist und sich dadurch auszeichnet, daß das extrudierte Schaumstoff-Hohlprofil in Abhängigkeit vom jeweiligen Verwendungszweck mit unterschiedliche Eigenschaften aufweisenden Verbundmaterialien kombiniert ist.
Auf diese Weise ist es möglich, Produkte mit besonders gestalteten und auch neuen Gebrauchseigenschaften zu schaffen, wobei das auf das extrudierte Schaumstoffmaterial aufgebrachte Verbundmaterial je nach Anforderung UV-beständig, dampfundurchlässig, feuerfest, säurefest oder in einem vorgebbaren Temperaturbereich, z.B. - 20°C und + 200°C temperaturbeständig ausgeführt wird.
Es ist ersichtlich, daß auf diese Weise ein großer Einsatzbereich abgedeckt und die jeweils gezielt geschaffenen Eigenschaften des Gesamtproduktes vorteilhaft genutzt werden können.

## Patentansprüche

1. Verfahren zur Herstellung eines rohrförmigen Dämmmaterials zur Wärme- und/oder Schalldämmung von Installationsrohren, bei dem aus einem Schaumstoffmaterial durch Extrusion ein Hohlprofil gebildet und mit einer Folienummantelung versehen wird,
**dadurch gekennzeichnet,**
**dass** während des Extrusionsvorganges auf die Außenfläche des Hohlprofils unter Nutzung der noch vorhandenen Schmelzklebefähigkeit des Hohlprofils eine Vielzahl von zumindest gruppenweise etwa parallel zueinander verlaufenden, fadenförmigen Festigkeitsträgern in Form zumindest eines Gitters aus Polyäthylen, Polyester, Glasfasern oder vergleichbar reißfesten Materialien zusammen mit der Folienummantelung aufgebracht wird.

2. Verfahren nach Anspruch 1,
**dadurch gekennzeichnet,**
**dass** die Ummantelungsfolie und die Festigkeitsträger zu einem Verbund zusammengefasst und gemeinsam auf das extrudierte Hohlprofil aufgebracht werden.

3. Rohrförmiges Dämm- und/oder Schutzmaterial für fluidförmige Medien führende Leitungen,
**gekennzeichnet durch**
ein extrudiertes Schaumstoff-Hohlprofil mit einer eine reißfeste Oberfläche aufweisenden Ummantelung aus einem Verbundmaterial, das zumindest eine Lage in Form einer gitterförmigen, flexiblen Verstärkung umfaßt, die mit dem Schaumstoffmaterial verschmolzen ist.

4. Rohrförmiges Dämm- und/oder Schutzmaterial nach Anspruch 3,
**dadurch gekennzeichnet,**
**dass** das extrudierte Hohlprofil in Abhängigkeit vom jeweiligen Verwendungszweck mit unterschiedliche Eigenschaften aufweisenden Verbundmaterial kombiniert und demgemäß UV-beständig und/oder dampfundurchlässig und/oder feuerfest und/oder säurefest und dergleichen ausgeführt ist.

## Claims

1. Method of manufacturing a tubular insulating material for the thermal and/or acoustic insulation of plumbing pipes, wherein a hollow section is formed by extrusion from a foam material and is provided with a foil jacket, **characterized in that**, during the extrusion process, a plurality of thread-like reinforcing elements in the form of at least one grid of polyethylene, polyester, glass fibers or comparable tear-resistant materials is introduced onto the outer surface of the hollow section while exploiting the still present melt adhesion capability of the hollow section, with the thread-like reinforcing elements extending approximately parallel to one another, at least group-wise.

2. Method in accordance with claim 1, **characterized in that** the jacketing foil and the reinforcing elements are combined into an assembly and are jointly applied onto the extruded hollow section.

3. Tubular insulating and/or protective material for conduits conducting media in fluid form, **characterized by** an extruded foam material hollow section having a jacket of a composite material having a tear resistant surface and including at least one layer in the form of a grid-like flexible reinforcement which is fused to the foam material.

4. Tubular insulating and/or protective material in accordance with claim 3, **characterized in that** the extruded hollow section is combined with composite materials having different characteristics depending on the particular use and is accordingly made resistant to ultraviolet light and/or vapor-impermeable and/or fire resistant and/or acid resistant and the like.

## Revendications

1. Procédé de fabrication d'un matériau d'isolation tubulaire destiné à l'isolation thermique et/ou phonique de tubes d'installations, dans lequel un profilé creux est formé par extrusion d'un matériau en mousse et muni d'un film de revêtement,
**caractérisé en ce que** pendant le processus d'extrusion, une pluralité de supports de résistance en forme de fils s'étendant approximativement parallèlement les uns par rapport aux autres, au moins par groupes, est appliquée avec le film de revêtement sur la face extérieure du profilé creux en utilisant le pouvoir d'adhésion par fusion encore existant, et ce sous la forme d'au moins un treillis en polyéthylène, en polyester, en fibres de verre ou en matériaux comparables résistant à la traction.

2. Procédé selon la revendication 1,
**caractérisé en ce que** le film de revêtement et les supports de résistance sont regroupés en un composite, et sont appliqués en commun sur le profilé creux extrudé.

3. Matériau d'isolation et/ou de protection tubulaire destiné à des conduites véhiculant des milieux à l'état de fluides,
**caractérisé par** un profilé creux extrudé en mousse, avec un revêtement en un matériau composite comportant une surface résistant à la traction, qui comprend au moins une couche sous la forme d'un renforcement flexible de type treillis qui est fondue avec le matériau en mousse.

4. Matériau d'isolation et/ou de protection tubulaire selon la revendication 3,
**caractérisé en ce que**, en fonction du domaine d'application respectif, le profilé creux extrudé est combiné avec un matériau composite ayant différentes propriétés et, conformément à cela, est réalisé de façon à résister aux UV et/ou à être imperméable à la vapeur et/ou à être réfractaire et/ou à résister aux acides et analogues.
